# FASCICULE DE BREVET EUROPEEN

(11) **EP 0 955 437 B1**
(45) Date de publication et mention de la délivrance du brevet: **28.05.2008**
(21) Numéro de dépôt: 99400496.8
(22) Date de dépôt: 01.03.1999
(51) Int. Cl.: E06B 3/54

(54) **Procédé et dispositif de fixation à baque pour panneaux**
Befestigungsvorrichtung und Verfahren mit einem Ring für Paneele
Fixing method and device with a ring for panels

(30) Priorité: 09.03.1998 FR 9802826; 24.02.1999 FR 9902312
(43) Date de publication de la demande: 10.11.1999
(73) Titulaire: LAUBEUF S.A., 94160 Saint-Mande (FR)
(72) Inventeur: Ponte, Gianfranco, 95270 Belloy en France (FR)
(74) Mandataire: Wagret, Frédéric

(56) Documents cités:
- EP-A- 0 452 746
- EP-A- 0 655 543
- AT-B- 373 953
- DE-A- 3 938 756
- DE-A- 4 223 694
- DE-A- 4 325 024
- FR-A- 2 732 730

## Description

La présente invention concerne un dispositif pour fixer au moins un panneau rigide sur une structure support, et en particulier un ou plusieurs panneaux de verre ou en matériau composite, sur une structure rigide, telle qu'un montant de construction (bâtiment, marquise ou similaire).

De manière connue, on fixe les panneaux sur une structure rigide (tel qu'un montant vertical ou horizontal), par l'intermédiaire d'un élément longiligne de liaison, en forme générale de boulon ou de vis, dont l'extrémité proximale (du côté du panneau) comprend une tête apte à buter sur les bords d'une ouverture prévue sur ledit panneau, et dont l'extrémité distale comporte des moyens (tels que des écrous) pour solidariser l'élément longiligne sur la structure.

Pour les panneaux de verre constitués d'un seul flanc, ces moyens de fixation connus donnent relativement satisfaction, à l'exception du fait que la vis doit d'abord traverser l'ouverture prévue dans le panneau, du côté opposé à la structure, par rapport au panneau. Il est des cas où l'accessibilité réduite occasionne une gêne pour l'installateur.

En outre, lorsque le panneau de verre est constitué de plusieurs flancs (ou feuilles) jointifs, dans le cas par exemple d'un double vitrage, les moyens de fixation connus, tels que décrits précédemment, présentent plusieurs inconvénients.

Tout d'abord, les moyens d'étanchéité sont difficiles à mettre en oeuvre et onéreux, compte tenu de la complexité de la structure et de l'épaisseur de l'ensemble des panneaux jointifs, si l'on veut s'assurer d'une parfaite étanchéité.

De plus, on réalise dans chacun des flancs de verre appelés à former un seul panneau, des ouvertures destinées à coopérer avec les vis ou les boulons de fixation.

Au moment de la mise en place des vis de fixation, les ouvertures réalisées d'un flanc à l'autre doivent être exactement en regard, avec une tolérance très faible. Or, le perçage des trous dans les flancs en verre est une opération d'autant plus difficile et coûteuse que la tolérance est petite. Tout décalage entre deux ouvertures prévues dans respectivement deux flancs jointifs, affecte, voire rend impossible, la mise en place de vis de fixation et des moyens d'étanchéité. Par exemple, les deux axes respectifs des ouvertures peuvent ne pas être parallèles ou il arrive que les ouvertures présentent un diamètre différent.

Enfin, dans le cas de panneaux complexes du type double vitrage, dans lequel deux panneaux en verre parallèles sont fixés à distance l'un de l'autre, les inconvénients mentionnés ci-dessus sont d'autant plus gênants. En effet, la distance séparant les deux panneaux parallèles rend encore plus difficile la fixation de la vis sur les panneaux, et par ailleurs augmente les risques de pénétration d'air dans l'espace déshydraté délimité par les deux panneaux de verre.

La demande de brevet EP-A-506 522 décrit un dispositif visant à pallier le problème de positionnement des trous en proposant un système de réglage par bagues excentriques.

L'inconvénient majeur de ce système est que son encombrement important fait qu'une grande partie des pièces du dispositif doit être disposée dans l'espace délimité entre les deux substrats du double vitrage.
Par voie de conséquence, ce dispositif ne convient pas à des panneaux simples ou à structure feuilletée où les deux flancs sont jointifs.

On connaît, par la demande de brevet européen EP-A-340 089, un panneau de vitrage feuilleté comportant deux flancs de verre dont l'une est traversée par un élément de fixation.

Cet élément, destiné au vissage du panneau de verre sur la structure, est composé d'un cylindre creux et fileté terminé par une rondelle débordant radialement et disposée entre les deux flancs et venant en butée à la périphérie du trou sur le flanc intérieur.

Si un tel dispositif permet d'éviter tout affleurement peu esthétique des éléments de fixation sur la face extérieure du panneau, il présente cependant certains inconvénients.

L'épaisseur de la rondelle disposée entre les deux flancs est susceptible de poser des problèmes d'adaptation du second flanc sur le premier et nécessite des précautions particulières contraignantes lors du collage du film intermédiaire qui se compose de trois pellicules différentes.

De plus, le dispositif ne permet pas le montage d'un type de fixation à rotule ou élastique sur la structure support, apte à permettre une mobilité du panneau de verre pour encaisser certaines contraintes, de dilatation par exemple.

Par ailleurs, on connaît, par la demande de brevet DE-A-43 25 024, un dispositif apte à fixer sur une structure support un ensemble de deux flancs en verre contrecollés, dont l'un comporte un trou. Un élément, formé de quatre pièces complémentaires en forme de L vues en coupe, est inséré dans l'ouverture en faisant pivoter successivement les pièces qui viennent en appui sur le deuxième flanc.
Si un tel dispositif permet de résoudre le problème de tolérance d'assemblage visé ci-dessus, il n'en présente pas moins des inconvénients.
Il est complexe à utiliser et relativement onéreux à fabriquer. L'opérateur doit faire preuve d'une certaine dextérité pour mettre en oeuvre ce dispositif qui réclame également, étant données les surfaces fonctionnelles qu'il possède, une précision et une qualité d'usinage très contraignante.
En outre, ce dispositif connu nécessite obligatoirement la présence de deux flancs pour un panneau puisque les pièces complémentaires viennent en appui sur la face correspondante du deuxième flanc.
Enfin, l'élément inséré dans l'ouverture, étant formé de quatre pièces distinctes, ne présente pas une rigidité maximale. Même un ajustement serré des différentes pièces de l'assemblage ne peut garantir l'absence totale de jeu entre elles. Au contraire, un jeu minimum est nécessaire pour faciliter le pivotement des pièces lors de leur mise en place, ce qui peut être préjudiciable à la fiabilité de l'ensemble.

Dans l'art antérieur il existe également la demande de brevet français FR-A-2732730 qui divulgue un dispositif d'attache pour la fixation d'un panneau de verre feuilleté à une structure portante. Néanmoins ce dispositif n'est pas simple à installer.

Dans ce contexte, la présente invention propose un procédé et un dispositif pour la fixation d'un panneau rigide, constitué d'un ou plusieurs flancs notamment en verre, sur une structure, qui soient simples à mettre en oeuvre, permettent une étanchéité parfaite, et qui de plus facilitent et simplifient la réalisation des ouvertures prévues sur le ou les panneaux.

A cette fin, la présente invention porte sur un dispositif de fixation sur une structure support d'au moins un panneau rigide en verre, comportant un premier flanc présentant une ouverture traversante, ayant une section droite en tronc de cône, un second flanc sans ouverture plaqué et collé sur le premier flanc le long d'un plan commun du coté opposé à la dite structure support, la dite ouverture présentant un diamètre vers la structure support plus petit que son diamètre du coté du plan commun, le dit dispositif de fixation comprenant un élément longiligne de liaison présentant une extrémité proximale orientée vers le panneau rigide, et une extrémité longiligne orientée vers la dite structure support et ayant des moyens de solidarisation sur la dite structure support, le dit dispositif de fixation ayant l'extrémité proximale de l'élément longiligne associée:
d'une part, à des moyens de butée coopérant avec une surface complémentaire de la dite ouverture, prévue dans le premier flanc du panneau rigide, comportant un élément annulaire qui présente une surface extérieure en forme de tronc de cône, de forme complémentaire à la dite ouverture du premier flanc et qui vient s'appuyer en butée contre la surface intérieure périphérique de la dite ouverture traversante du premier flanc du panneau rigide,
et d'autre part, à des moyens de blocage,
caractérisé en ce que le dit élément annulaire est une bague en matériau déformable élastiquement, tel que de l'aluminium ou équivalent, présentant une fente et des bords, de façon à ce que, par rapprochement des bords l'un vers l'autre, le plus grand diamètre de la bague devient légèrement inférieur au diamètre de l'ouverture prévue dans le flanc distal du panneau rigide feuilleté.

L'invention sera bien comprise à la lumière de la description qui suit, se rapportant à un exemple illustratif mais non limitatif, en référence au dessin annexé dans lequel :
- la figure 1 est une vue en coupe transversale du dispositif de l'invention pour la fixation d'un ensemble de panneaux de verre à structure feuilletée et à double vitrage ;
- la figure 2 est une vue de dessus de l'élément annulaire déformable utilisé dans la réalisation de la figure 1 ;

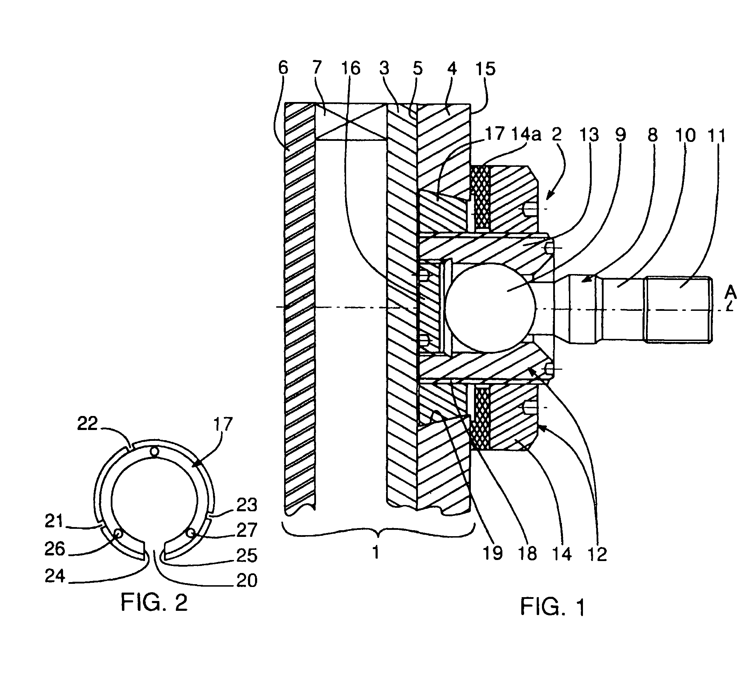

En référence à la figure 1, le dispositif de fixation de l'invention est décrit ci-après dans l'application à la fixation d'un ensemble de panneaux en verre, du type comprenant d'une part un panneau à structure feuilletée comportant deux ou plusieurs flancs ou plaques de verre plaqués l'un contre l'autre, et d'autre part un panneau de double vitrage, espacé et parallèle, sur une structure support qui n'est pas représentée pour des raisons de clarté, et qui est quelconque et connue en soi. Pour les besoins de la compréhension, la structure comporte par exemple des montants verticaux et/ou horizontaux métalliques.

L'ensemble de panneaux de verre porte la référence 1, tandis que le dispositif de fixation est référencé 2.

On définit ci-après le terme proximal comme se rapportant à un élément proche ou tourné vers les panneaux de verre, tandis que le qualificatif distal concerne un élément qui est éloigné par rapport à ces derniers, c'est-à-dire proche de ou tourné vers ladite structure support.

Ainsi, dans l'exemple des figures 1 à 6, de manière simplifiée, le terme distal vise des éléments de la partie droite des figures, tandis que le terme proximal vise des éléments de la partie gauche de ces mêmes figures.

L'ensemble de panneaux de verre comporte d'une part un panneau de vitrage feuilleté constitué de deux flancs (ou plaques) en verre collés par un ou plusieurs films plastiques, à savoir un flanc proximal 3 et un flanc distal 4, plaqués l'un contre l'autre, selon une surface commune 5, et d'autre part un troisième flanc (plaque) 6 en verre de double vitrage, placé à distance du panneau feuilleté 3-4, par l'intermédiaire d'un joint de scellement formant entretoise. L'ensemble 1 de panneaux de verre est du type connu en lui-même.

Egalement pour des raisons de clarté, les proportions et l'échelle ne sont pas strictement respectées sur les figures.
Le dispositif de fixation 2 selon l'invention comporte un élément longiligne 8 dont l'extrémité proximale comporte une tête 9, en l'occurrence sphérique, tandis que l'extrémité distale comporte un pas-de-vis 11 (mâle ou femelle) susceptible d'être associé à des moyens de solidarisation tels que rondelles et vis, (non représentés), de l'élément longiligne 11 sur ladite structure.

La tête sphérique 9 de l'élément longiligne 8 est associée à des moyens de blocage 12 comprenant d'une part une coquille sensiblement cylindrique 13 à l'intérieur de laquelle est disposée ladite tête sphérique 9, et d'autre part un écrou de blocage 14, apte à porter contre la surface 15 distale du flanc distal 4, par l'intermédiaire d'une rondelle 14a en polyéthylène. L'écrou 14 est vissé sur le filetage prévu à l'extérieur de la coquille cylindrique 13.

La tête 9 sphérique possède un degré de liberté suivant un angle solide ouvert vers la structure.

Afin de bloquer en position la tête 9, et donc l'élément longiligne 8, à l'intérieur de la coquille 13, est prévue une rondelle/écrou 16 vissée sur un filetage prévu à l'intérieur de la coquille. La partie distale de l'écrou 16 est apte à porter par l'intermédiaire d'une bague en acier inoxydable par exemple, sur la partie proximale de la tête sphérique 9.

Le dispositif de fixation de l'invention comporte également des moyens de butée, constituée en l'occurrence d'une bague annulaire 17, d'épaisseur sensiblement égale ou légèrement inférieure à l'épaisseur du flanc distal 4, à savoir celui des flancs du panneau feuilleté, situé le plus proche de la structure. La bague annulaire 17 est vissée sur un filetage 18 prévu sur la surface extérieure de la coquille de blocage 13, et plus particulièrement à la base de ladite coquille.

La bague annulaire de butée 17 comporte une surface extérieure 19, dans un plan radial, en forme de tronc de cône (vu en section droite), de forme complémentaire à une ouverture traversante, prévue dans le flanc distal 4 du panneau de vitrage feuilleté 3,4.

La bague de butée 17 est montrée en vue en plan sur la figure 2, à une échelle réduite par rapport à la figure 1. La bague annulaire 17 est ouverte sur une partie de son pourtour, sur une distance, mesurée le long de la circonférence, de quelques millimètres, et entre 3 et 10 mm et de préférence de l'ordre de 5 mm. L'ouverture ou fente porte la référence 20.

La bague annulaire est constituée en matériau déformable élastiquement tel que de l'aluminium ou équivalent, de manière que par rapprochement l'un vers l'autre des bords 24 et 25 de la fente 20, on provoque la diminution du diamètre de ladite bague. Le plus grand diamètre de la bague devient, par pression sur les bords 24 et 25, légèrement inférieur au diamètre du trou ou de l'ouverture prévue dans le flanc 4 distal du panneau feuilleté.

Des échancrures 21, 22 et 23 sont prévues, par exemple au nombre de trois, uniformément réparties sur le pourtour de la bague, les échancrures étant ouvertes dans une direction centrifuge. Les échancrures permettent la déformation élastique de la bague dans le sens de sa circonférence.

L'ouverture prévue dans le flanc distal 4 présente une forme vue en section droite, en tronc de cône, dont le sommet se trouve du côté de la structure support. La surface extérieure radiale de la bague de blocage 17 comprend une surface complémentaire 19 telle que la bague annulaire, une fois en place, c'est-à-dire comme représenté sur la figure 1, soit maintenue en position et ne puisse être déplacée en translation notamment, selon l'axe A longitudinal de l'élément longiligne, c'est-à-dire transversalement au plan des flancs en verre. La surface extérieure radiale 19 de la bague de butée 17 constitue un moyen de butée coopérant avec la surface périphérique intérieure de l'ouverture prévue dans le flanc distal 4. On note que la disposition respective de la coquille 13, de la rondelle 16 de blocage, et de la bague de butée annulaire 17, est telle que ces trois éléments présentent leurs surfaces proximales, sensiblement au niveau du plan 5 commun au flanc proximal 3 et au flanc distal 4.

L'ouverture prévue dans le flanc distal 4 présente un diamètre, du côté de la surface 15 distale, tourné vers la structure support, plus petit que le diamètre du côté du flanc commun 5 des flancs respectifs proximal 3 et distal 4.

L'ouverture prévue dans le flanc distal 4 présente un diamètre tel que la bague de butée 17 puisse pénétrer dans l'ouverture, suivant la direction définie par l'axe A, de la structure vers les flancs, lorsque la bague présente un diamètre réduit, c'est-à-dire lorsque la bague est déformée par rapprochement des bords 24 et 25 de la fente 20.
Le mode d'installation du dispositif de l'invention est décrit ci-après.

Les flancs de verre de l'ensemble de panneaux à vitrage feuilleté et double vitrage sont d'abord assemblés.

Dans un premier temps, on réalise, sur le flanc distal 4 des ouvertures traversantes appelées à coopérer chacune avec un dispositif de fixation de l'invention. Les flancs proximal 3 (sans ouvertures) et distal 4 (avec ouvertures) sont plaqués l'un contre l'autre et maintenus par un film plastique, résine ou équivalent. Ensuite, on dispose des joints de scellement (du type de celui référencé 7 sur la figure 1), pour fixer le flanc de double vitrage 6 à distance de l'ensemble de panneaux feuilletés 3,4.

Ensuite, pour chaque ouverture prévue sur le flanc distal 4, on introduit une bague annulaire de butée 17 après déformation de celle-ci, en vue de réduire son diamètre. Une fois la bague mise en place dans l'ouverture, on libère les forces de serrage appliquées au préalable sur la bague. Celle-ci reprend alors sa forme et son diamètre initial, pour venir en butée contre la surface intérieure périphérique de l'ouverture correspondante, prévue sur le flanc distal 4. La bague 17 est alors dans sa position montrée sur la figure 1. Il est également possible, avant la mise en place de la bague 17, de disposer quelques points de colle sur la périphérie de l'ouverture prévue dans le flanc 3 proximal, afin que la bague 17 soit solidaire du flanc proximal 3 après installation et réglage.

En référence à la figure 2, les forces de serrage sont appliquées sur la bague 17, en utilisant des trous (26,27) prévus sur la surface supérieure de la bague, de chaque côté de la fente 20, à l'aide d'un outil comportant deux bras aptes à se rapprocher l'un de l'autre, par exemple dans une direction tangentielle, pour provoquer le rapprochement réciproque des bords 24 et 25 de la fente 20, et donc la déformation de la bague en vue de la réduction de son diamètre.

La bague ne possède alors qu'un seul degré de liberté, à savoir en rotation autour de l'axe A. En effet, elle ne peut ni se déplacer en translation vers la structure, du fait de l'effet de coin constitué par les surfaces coniques de la surface extérieure de la bague et de la surface intérieure de l'ouverture prévue dans le flanc 4, ni dans le sens s'éloignant de la structure, car étant bloquée par la présence du flanc distal 3.
Dans un second temps, on fait pénétrer à l'intérieur de la bague, et on fixe sur cette dernière par vissage, la coquille 13 de blocage, dans laquelle on a préalablement disposé l'élément longiligne 8 et la rondelle de blocage 16. L'ensemble coquille 13, élément longiligne 8, rondelle 16 est vissé jusqu'à ce que la rondelle 16 et la coquille 13 viennent sensiblement au niveau du plan commun 5 entre les flancs proximaux 3 et distaux 4.

Il est à noter que la rondelle de blocage 16 est vissée pour venir en butée dans sa partie supérieure (distale) contre la partie proximale de la tête sphérique 9 de l'élément longiligne 8 et ce dans une position angulaire donnée de l'élément longiligne 8. Dans le cas de la figure 1, la rotule est bloquée en position telle que l'axe A de l'élément longiligne 8 soit perpendiculaire au plan des flancs de verre.

Ensuite, on place sur la coquille 13, la rondelle d'étanchéité 14a, de manière que ladite rondelle porte sur la surface 15 distale du flanc distal 4, puis on visse sur la coquille 13 l'écrou de blocage 14 de manière à bloquer en position la coquille 13 par rapport à l'ensemble de double vitrage 3,4, et ce par écrasement de la rondelle d'étanchéité 14a.

Le mode de réalisation de l'invention utilisant une bague déformable peut aussi bien servir à un panneau de verre simple (à flanc unique) ou à structure feuilletée (deux ou plusieurs flancs), ou un panneau de double vitrage dont l'un des substrats est feuilleté.

Le dispositif à bague déformable peut recevoir un élément longiligne de fixation quelconque, qu'il soit à rotule, élastique ou fixe.

On comprend de ce qui précède que le procédé et le dispositif de la présente invention comportent plusieurs avantages par rapport à l'art antérieur.

Ainsi, le dispositif de fixation simplifie la réalisation des ensembles de panneaux de verre à vitrage feuilleté (composé de deux ou plusieurs flancs plaqués l'une contre l'autre) puisqu'il suffit de percer un seul flanc, celui le plus proche de la structure à savoir le flanc distal 4 de la figure 1.

Le fait qu'il ne soit pas nécessaire de percer le deuxième ou les autres flancs du panneau feuilleté, a pour corollaire de lever toute difficulté de tolérance lors de la solidarisation des deux flancs 3 et 4 du panneau feuilleté, au regard de la position de l'ouverture prévue dans l'un des flancs.

Par ailleurs, l'étanchéité est assurée de manière parfaite puisque aucune communication n'est possible entre la partie proximale (tournée vers l'extérieur et soumise aux intempéries) de l'ensemble de vitrage feuilleté, et la partie distale tournée vers la structure.

En outre, l'espace d'air délimité par le vitrage feuilleté et le panneau de double vitrage est préservé de toute communication avec l'extérieur puisque le dispositif selon l'invention ne nécessite pas le perçage complet de l'un des substrats.

La simplicité des différentes pièces employées permet un montage aisé et rapide du système qui peut recevoir tous les types de fixation selon les exigences, que ce soit à rotule ou élastique, permettant un réglage ou un débattement du panneau par rapport à la structure, ou totalement rigide.

Le dispositif de fixation de l'invention présente des avantages attractifs en termes de coût de réalisation et d'installation, tout en garantissant des conditions d'étanchéité et de solidarisation adéquates.

## Revendications

1. Dispositif de fixation sur une structure support d'au moins un panneau rigide (1) en verre, comportant un premier flanc (4) présentant une ouverture traversante, ayant une section droite en tronc de cône, un second flanc (3) sans ouverture plaqué et collé sur le premier flanc (4) le long d'un plan commun (5) du coté opposé à la dite structure support,
la dite ouverture présentant un diamètre vers la structure support plus petit que son diamètre du coté du plan commun (5)
le dit dispositif de fixation comprenant un élément longiligne de liaison (8) présentant une extrémité proximale (9) orientée vers le panneau rigide (1), et une extrémité longiligne (11) orientée vers la dite structure support et ayant des moyens de solidarisation sur la dite structure support,
le dit dispositif de fixation ayant l'extrémité proximale (9) de l'élément longiligne (8) associée:
d'une part, à des moyens de butée coopérant avec une surface complémentaire de la dite ouverture, prévue dans le premier flanc (4) du panneau rigide (1), comportant un élément annulaire (17) qui présente une surface extérieure (19) en forme de tronc de cône, de forme complémentaire à la dite ouverture du premier flanc (4) et qui vient s'appuyer en butée contre la surface intérieure périphérique de la dite ouverture traversante du premier flanc (4) du panneau rigide (1),
et d'autre part, à des moyens de blocage (12),
**caractérisé en ce que** le dit élément annulaire (17) est une bague en matériau déformable élastiquement, tel que de l'aluminium ou équivalent, présentant une fente (20) et des bords (24,25), de façon à ce que, par rapprochement des bords (24,25) l'un vers l'autre, le plus grand diamètre de la bague (17) devient légèrement inférieur au diamètre de l'ouverture prévue dans le flanc distal (4) du panneau rigide feuilleté (1).

2. Dispositif de fixation selon la revendication 1, **caractérisé en ce que** ledit élément annulaire (17) est apte à coopérer avec les dits moyens de blocage (12).

3. Dispositif de fixation selon l'une des revendications précédentes, **caractérisé en ce que** l'extrémité proximale (9) du dit élément longiligne (8) est liée aux dits moyens de blocage (12) de manière à pouvoir être bloquée suivant un angle par rapport à un axe perpendiculaire au panneau (1).

4. Dispositif de fixation l'une des revendications précédentes, **caractérisé en ce que** l'extrémité proximale (9) de l'élément longiligne (8) est une rotule.

5. Dispositif de fixation selon l'une des revendications précédentes, **caractérisé en ce qu'**une rondelle de blocage (16) est vissée pour venir en butée contre la partie proximale de la tête sphérique (9) de l'élément longiligne (8).

6. Dispositif de fixation selon l'une des revendications précédentes, **caractérisé en ce que** l'extrémité proximale (9) dudit élément longiligne (8) de liaison, une fois bloquée, est apte à être solidarisée à l'élément annulaire (17) de manière à ne permettre au panneau (1) aucun degré de liberté.

7. Dispositif de fixation selon l'une des revendications précédentes, **caractérisé en ce que** les moyens de blocage (12) comportent une coquille sensiblement cylindrique (13) apte à être solidarisée audit élément annulaire (17), et associée à un écrou (14) de blocage de la coquille cylindrique (13) par rapport aux flancs (3,4), cet écrou étant situé sur la surface distale (15) du flanc (4).

8. Dispositif de fixation selon l'une des revendications précédentes, **caractérisé en ce que** l'épaisseur dans le sens transversal dudit élément annulaire (17) est inférieure ou égale à l'épaisseur du premier flanc (4).

9. Dispositif de fixation selon l'une des revendications précédentes, **caractérisé en ce que** l'élément annulaire (17) présente des trous (26, 27) permettant le rapprochement des bords (24, 25) de la fente (20) de ce dit élément (17).

10. Dispositif de fixation selon l'une des revendications précédentes, **caractérisé en ce que** l'élément annulaire (17) présente des échancrures (21, 22, 23) permettant la déformation élastique de la bague (17) dans le sens de la circonférence.

11. Dispositif de fixation selon l'une des revendications précédentes, **caractérisé en ce que** des joints de scellement (7) fixent le double vitrage (6) à distance de l'ensemble de panneaux feuilletés (3,4).

12. Procédé d'installation du dispositif de fixation selon les revendication 1 à 11 pour lequel :
Dans un premier temps :
- on réalise, sur le flanc distal (4) des ouvertures traversantes
- les flancs proximal (3) sans ouverture et distal (4) avec ouverture sont plaqués l'un contre l'autre et maintenus par un film plastique, résine ou équivalent.
- pour chaque ouverture prévue sur le flanc distal (4), on introduit une bague annulaire déformable de butée (17).
Dans un second temps :
- on dispose des joints de scellement pour fixer le flanc de double vitrage (6) à distance de l'ensemble de panneaux feuilletés (3,4).
- une fois la bague (17) mise en place dans l'ouverture, on libère les forces de serrage appliquées au préalable sur la bague (17).
- les forces de serrage sont appliquées sur la bague (17), en utilisant des trous (26,27) prévus sur la surface supérieure de la bague (17), de chaque côté de l'ouverture (20), à l'aide d'un outil comportant deux bras aptes à se rapprocher l'un de l'autre, par exemple dans une direction tangentielle, pour provoquer le rapprochement réciproque des bords (24, 25) de l'ouverture (20).
Dans un troisième temps :
- on fait pénétrer à l'intérieur de la bague (17) la coquille (13) de blocage
- on a préalablement disposé l'élément longiligne (8) et la rondelle de blocage (16) dans la coquille (13) de blocage
- on fixe la coquille (13) de blocage sur la bague (17).
- l'ensemble coquille (13), élément longiligne (8), rondelle (16) est vissé jusqu'à ce que la rondelle (16) et la coquille (13) viennent sensiblement au niveau du plan commun (5) entre les flancs proximaux (3) et distaux (4).
- on place sur la coquille (13), la rondelle d'étanchéité (14a), de manière que ladite rondelle porte sur la surface (15) distale du flanc distal (4),
- on visse sur la coquille (13) l'écrou de blocage (14) de manière à bloquer en position la coquille (13) par rapport à l'ensemble de double vitrage (3,4), et ce par écrasement de la rondelle d'étanchéité (14a).

## Claims

1. An attaching device for fastening to a supporting structure at least one rigid panel (1) made of glass, comprising a first side (4) with a through opening, having a truncated cone cross-section, a second side (3) with no opening that is set against and glued to the first side (4) along a common plane (5) on the side opposite the said supporting structure,
the said opening having a diameter near the supporting structure that is smaller than its diameter near the common plane (5)
the said attaching device comprising a long connecting element (8) with a proximal end (9) turned towards the rigid panel (1) and a long end (11) turned towards the said supporting structure, and having means for making it integral with the said supporting structure,
the said attaching device having the proximal end (9) of the long element (8) associated:
firstly with stop means cooperating with a complementary surface of the said opening, provided in the first side (4) of the rigid panel (1), comprising an annular element (17) which has an exterior surface (19) with a truncated cone shape, a shape complementary to the said opening of the first side (4) and which abuts against the interior peripheral surface of the said through opening of the first side (4) of the rigid panel (1),
and secondly, with locking means (12),
**characterised in that** the said annular element (17) is a ring made of elastically deformable material, such as aluminium or the like, with a slot (20) and edges (24,25), so that, by bringing the edges (24-25) closer to each other, the larger diameter of the ring (17) becomes slightly smaller than the diameter of the opening provided in the distal side (4) of the rigid laminated panel (1).

2. An attaching device according to claim 1, **characterised in that** the said annular element (17) is adapted to cooperate with the said locking means (12).

3. An attaching device according to any of the preceding claims, **characterised in that** the proximal end (9) of the said long element (8) is linked to the said locking means (12) so as to be able to be blocked at an angle in relation to an axis perpendicular to the panel (1).

4. An attaching device according to any of the preceding claims, **characterised in that** the proximal end (9) of the long element (8) is a ball.

5. An attaching device according to any of the preceding claims, **characterised in that** a lock washer (16) is screwed so as to abut against the proximal part of the spherical head (9) of the long element (8).

6. An attaching device according to any of the preceding claims, **characterised in that** the proximal end (9) of the said linking long element (8), when locked, is adapted to be made integral with the annular element (17) so as to leave no degree of freedom to the panel (1).

7. An attaching device according to any of the preceding claims, **characterised in that** the locking means (12) comprise a substantially cylindrical shell (13) adapted to be made integral with the said annular element (17), and associated with a nut (14) for locking the cylindrical shell (13) to the sides (3,4), the nut being located on the distal surface (15) of the side (4).

8. An attaching device according to any of the preceding claims, **characterised in that** the thickness in the transverse direction of the said annular element (17) is less than or equal to the thickness of the first side (4).

9. An attaching device according to any of the preceding claims, **characterised in that** the annular element (17) has holes (26, 27) for bringing closer together the edges (24, 25) of the slot (20) of the said element (17).

10. An attaching device according to any of the preceding claims, **characterised in that** the annular element (17) has recesses (21, 22, 23) allowing the elastic deformation of the ring (17) in the direction of the circumference.

11. An attaching device according to any of the preceding claims, **characterised in that** sealing joints (7) fix the double glazing (6) at some distance from the laminated panel assembly (3,4).

12. A method for installing the attaching device according to claims 1 to 11 wherein:
First of all:
- through holes are made on the distal side (4)
- the proximal side (3) with no opening and the distal side (4) with an opening are set against each other and held by a film made of plastic, resin or the like.
- for each opening made on the distal side (4), a deformable annular stopping ring (17) is inserted.
Secondly:
- sealing joints are placed to attach the double glazing side (6) at some distance from the laminated panel assembly (3,4).
- once the ring (17) has been placed in the opening, the tightening forces that were applied earlier on the ring (17) are released.
- the tightening forces are applied on the ring (17), using holes (26,27) provided on the upper surface of the ring (17), on either side of the opening (20), with a tool comprising two arms adapted to come closer to each other, for example in a tangential direction, to lead to the reciprocal coming closer of the edges (24, 25) of the opening (20).
Thirdly:
- the locking shell (13) is made to enter inside the ring (17)
- beforehand, the long element (8) and the lock washer (16) are inserted in the locking shell (13)
- the locking shell (13) is attached to the ring (17).
- the shell (13), long element (8) and washer (16) assembly is screwed until the washer (16) and the shell (13) are more or less on the common plane (5) between the proximal side (3) and the distal side (4).
- the sealing washer (14a) is placed on the shell (13) so that the said washer rests on the distal surface (15) of the distal side (4),
- on the shell (13), the lock nut (14) is screwed so as to block the shell (13) in position relative to the double glazing assembly (3,4), by pressing the sealing washer (14a).

## Patentansprüche

1. Befestigungsvorrichtung auf einer Stützstruktur mit mindestens einer festen Glasplatte (1), mit einer ersten Flanke (4), die eine durchgehende Öffnung mit einem konischen Querschnitt aufweist, einer zweiten Flanke (3) ohne Öffnung, die an der ersten Flanke (4) anliegt und entlang einer gemeinsamen Ebene (5) der dieser Stützstruktur gegenüberliegenden Seite an ihr festgeklebt ist, wobei diese Öffnung zur Stützstruktur hin einen kleineren Durchmesser aufweist als auf der Seite der gemeinsamen Ebene (5),
wobei diese Befestigungsvorrichtung ein längliches Verbindungselement (8) mit einem proximalen Ende (9) aufweist, das zur festen Platte (1) gerichtet ist, sowie mit einem länglichen Ende (11), das zur Stützstruktur hin ausgerichtet ist und auf dieser Stützstruktur Verbindungsmittel hat,
wobei diese Befestigungsvorrichtung das proximale Ende (9) des länglichen Elements (8) assoziiert hat:
einerseits mit Anschlagmitteln, die mit einer ergänzenden Oberfläche dieser Öffnung auf der ersten Flanke (4) der festen Platte (1) zusammenwirken, welche ein Ringelement (17) umfassen, das eine Außenfläche (19) in Form eines Kegelstumpfes aufweist, von ergänzender Form zur Öffnung der ersten Flanke (4) ist und das auf der peripheren Innenfläche der durchgehenden Öffnung der ersten Flanke (4) der festen Platte (1) zum Anschlag kommt,
und andererseits mit Verriegelungsmitteln (12),
**dadurch gekennzeichnet, dass** dieses Ringelement (17) ein Ring aus einem elastisch verformbaren Werkstoff ist, wie z. B. Aluminium oder ein gleichwertiger Werkstoff, und einen Schlitz (20) und Ränder (24,25) aufweist, sodass durch die Annäherung der Ränder (24-25) zueinander der größte Durchmesser des Rings (17) geringfügig kleiner wird als der Durchmesser der Öffnung in der distalen Flanke (4) des Verbundglases (1).

2. Befestigungsvorrichtung nach Anspruch 1, **dadurch gekennzeichnet, dass** dieses Ringelement (17) mit diesen Verriegelungsmitteln (12) zusammenwirken kann.

3. Befestigungsvorrichtung nach einem der vorausgehenden Ansprüche, **dadurch gekennzeichnet, dass** das proximale Ende (9) des länglichen Elements (8) derart mit den Verriegelungsmitteln (12) verbunden ist, dass es gemäß einem Winkel in Bezug auf eine senkrechte Achse zur Platte (1) blockiert werden kann.

4. Befestigungsvorrichtung nach einem der vorausgehenden Ansprüche, **dadurch gekennzeichnet, dass** das proximale Ende (9) des länglichen Elements (8) ein Kugelgelenk ist.

5. Befestigungsvorrichtung nach einem der vorausgehenden Ansprüche, **dadurch gekennzeichnet, dass** eine Sicherungsscheibe (16) eingeschraubt ist, um am proximalen Teil des Kugelkopfes (9) des länglichen Elements (8) zum Anschlag zu kommen.

6. Befestigungsvorrichtung nach einem der vorausgehenden Ansprüche, **dadurch gekennzeichnet, dass** das proximale Ende (9) des länglichen Verbindungselements (8), nachdem es blockiert wurde, derart mit dem Ringelement (17) verbunden werden kann, dass der Platte (1) keinerlei Freiraum gelassen wird.

7. Befestigungsvorrichtung nach einem der vorausgehenden Ansprüche, **dadurch gekennzeichnet, dass** die Verriegelungsmittel (12) eine annähernd zylinderförmige Schale (13) umfassen, die an diesem Ringelement (17) verbunden und mit einer Sicherungsmutter (14) der zylinderförmigen Schale (13) in Bezug auf die Flanken (3,4) assoziiert werden kann, wobei sich diese Mutter auf der distalen Fläche (15) der Flanke (4) befindet.

8. Befestigungsvorrichtung nach einem der vorausgehenden Ansprüche, **dadurch gekennzeichnet, dass** die Stärke in der Querrichtung des Ringelements (17) kleiner oder gleich der Stärke der ersten Flanke (4) ist.

9. Befestigungsvorrichtung nach einem der vorausgehenden Ansprüche, **dadurch gekennzeichnet, dass** das Ringelement (17) Löcher (26, 27) aufweist, durch die die Ränder (24, 25) des Schlitzes (20) dieses Elements (17) angenähert werden können.

10. Befestigungsvorrichtung nach einem der vorausgehenden Ansprüche, **dadurch gekennzeichnet, dass** das Ringelement (17) Aussparungen (21, 22, 23) aufweist, die die elastische Verformung des Rings (17) in der Umfangsrichtung ermöglichen.

11. Befestigungsvorrichtung nach einem der vorausgehenden Ansprüche, **dadurch gekennzeichnet, dass** Verschlussdichtungen (7) die Doppelverglasung (6) in Distanz zu den Verbundgläsern (3,4) fixieren.

12. Installationsverfahren der Befestigungsvorrichtung nach den Ansprüchen 1 bis 11, bei dem:
als erstes:
- man an der distalen Flanke (4) durchgehende Öffnungen herstellt
- die proximalen Flanken (3) ohne Öffnung und distalen Flanken (4) mit Öffnung gegeneinander gepresst und durch eine Plastikfolie, durch Harz oder Gleichwertiges gehalten werden.
- für jede an der distalen Flanke (4) vorgesehene Öffnung ein verformbarer Anschlagring (17) eingeführt wird.
als zweites:
- man Verschlussdichtungen anbringt, um die Doppelglasflanke (6) in Distanz zu den Verbundgläsern (3,4) zu fixieren.
- nachdem der Ring (17) in der Öffnung angebracht wurde, man die vorher am Ring (17) angebrachten Spannkräfte freisetzt.
- die Spannkräfte auf den Ring (17) einwirken, indem man auf der oberen Fläche des Rings (17) vorgesehene Löcher (26,27) auf beiden Seiten der Öffnung (20) mit einem Werkzeug mit zwei Armen anwendet, die sich einander nähern können, z. B. in einer tangentialen Richtung, um die gegenseitige Annäherung der Ränder (24, 25) der Öffnung (20) zu bewirken.
Als drittes:
- man lässt die Sicherungsschale (13) in das Innere des Rings (17) eindringen.
- vorab hat man das längliche Element (8) und die Sicherungsscheibe (16) in die Sicherungsschale (13) gelegt.
- man fixiert die Sicherungsschale (13) auf den Ring (17).
- Schale (13), längliches Element (8), Scheibe (16) werden zusammengeschraubt, bis die Scheibe (16) und die Schale (13) annähernd in den Bereich der gemeinsamen Ebene (5) zwischen den proximalen (3) und distalen (4) Flanken kommen.
- man platziert die Dichtungsscheibe (14a) derart auf die Schale (13), dass diese Scheibe auf der distalen Oberfläche (15) der distalen Flanke (4) aufliegt,
- man schraubt die Sicherungsmutter (14) derart auf die Schale (13), dass die Schale (13) in Bezug zur gesamten Doppelverglasung (3,4) durch Zusammendrücken der Dichtungsscheibe (14a) in der Position blockiert wird.
